Europäisches Patentamt

(19) European Patent Office

Office européen des brevets

(11) Veröffentlichungsnummer: **0 071 959**
A2

(12) **EUROPÄISCHE PATENTANMELDUNG**

(21) Anmeldenummer: **82107001.8**

(22) Anmeldetag: **03.08.82**

(51) Int. Cl.³: **B 62 D 47/02**

(30) Priorität: **12.08.81 DE 3131935**

(43) Veröffentlichungstag der Anmeldung: **16.02.83**
Patentblatt 83/7

(84) Benannte Vertragsstaaten: **AT BE CH DE FR GB IT LI LU NL SE**

(71) Anmelder: **Feutlinske, Hilmar, Heilwigstrasse 2, D-2000 Hamburg 20 (DE)**

(72) Erfinder: **Feutlinske, Hilmar, Heilwigstrasse 2, D-2000 Hamburg 20 (DE)**

(74) Vertreter: **Glawe, Delfs, Moll & Partner Patentanwälte, Rothenbaumchaussee 58 Postfach 2570, D-2000 Hamburg 13 (DE)**

(54) **Anordnung an einem Personenverkehrsmittel, insbesondere Omnibus, zum Aufnehmen (bzw. Abgeben) von Rollstuhlfahrgästen.**

(57) Die Anordnung an einem Personenverkehrsmittel, insbesondere Omnibus (1), zum Aufnehmen (bzw. Abgeben) von Rollstuhlfahrgästen weist oberhalb der Aufnahmeöffnung (2) des Verkehrsmittels (1) eine Fahrschiene (4) auf. An Gleithängern (7), die mit der Fahrschiene (4) verbindbar sind, sind speziell konstruierte Rollsitze (8) oder Rollstuhlhalterungen (9) für handelsübliche Rollstühle (10) befestigt. Mit Hilfe der Anordnung kann der Rollstuhlfahrgast mit seinem Rollsitz (8) oder Rollstuhl (10) leicht in das Verkehrsmittel (1) hineingebracht oder aus demselben herausgebracht werden. Die Fahrschiene kann sich im Innern des Verkehrsmittels (1) fortsetzen und dort zusätzlich zur Arretierung des Rollsitzes oder -stuhls bei der Fahrt herangezogen werden.

Glawe, Delfs, Moll & Partner - p 10473/82 EU - Seite 4

Beschreibung

Die Erfindung bezieht sich auf eine Anordnung an einem Personenverkehrsmittel, insbesondere Omnibus, zum Aufnehmen von Rollstuhlfahrgästen.

Bei der Beförderung von an den Rollstuhl gebundenen Fahrgästen bereitet der Ein- und Ausstieg wegender zu überwindenden Stufen beträchtliche Schwierigkeiten. Dies ist auch ein Sicherheitsproblem, weil die Rollstuhlfahrgäste im Notfall nicht schnell genug aus dem Verkehrsmittel herausgeschoben werden können. Schließlich haben üblicheRollstühle den Nachteil, daß ihre Festigkeit nicht hinreicht im Hinblick auf die Kräfte, mit denen man bei der Personensicherung in Verkehrsmitteln rechnen muß.

Der Erfindung liegt daher die Aufgabe zugrunde, eine Anordnung zu schaffen, die den Ein- und Ausstieg von Rollstuhlfahrgästen und deren Sicherung im Verkehrsmittel erleichtert.

Die erfindungsgemäße Lösung besteht darin, daß oberhalb der Aufnahmeöffnung des Verkehrsmittels eine Fahrschiene angeordnet ist und die Rollstühle bzw. Rollstuhlhalterungen einen mit der Schiene verbindbaren Gleithänger aufweisen.

Unter "Rollstühlen" sind dabei nicht nur handelsübliche Rollstühle für Behinderte zu verstehen, sondern auch speziell für den Transport in den Personenverkehrsmitteln konstruierte fahrbare Sitze, die im folgenden auch als "Rollsitze" bezeichnet werden.

Die erfindungsgemäße Anordnung macht die Aufnahme der Rollstuhlfahrgäste in das Verkehrsmittel unabhängig davon, wie die Einstiegsöffnungen des Verkehrsmittels in ihrem unteren Bereich gestaltet sind, nämlich insbesondere unabhängig von Stufen. Es ist daher durchaus möglich, eine und dieselbe Einstiegsöffnung in ihrem unteren Bereich mit Stufen für den Einstieg unbehinderter Personen und in ihrem oberen Bereich mit der erfindungsgemäßen Fahrschiene zum Einbringen von Rollstuhlfahrgästen zu versehen, ohne daß diese Einrichtungen sich gegenseitig hindern. Im Gegenteil können sie sich ergänzen, weil die die Rollstuhlfahrgäste in die Aufnahmeöffnung einschiebende Person im unteren Bereich der Öffnung irgendwelche Einstiegshilfen für sich selbst während des Einschiebens vorfinden sollte. Die Fahrschiene benötigt wenig Unterbringungsplatz auch dann, wenn sie aus der Gebrauchsstellung in eine inoperative Transportlage innerhalb des Verkehrsmittels gebracht worden ist, beispielsweise eingeschwenkt oder eingeschoben ist. Dies unterscheidet sie vorteilhaft von schiefen Ebenen oder Rollstuhlhebebühnen. Sie verspricht auch größere Sicherheit als diese bekannten Einstiegshilfen, weil der an der Schiene hängende Rollstuhl wegen der Aufhängung über dem Schwerpunkt höchstens pendeln aber nicht kippen kann. Die Ausstiegssicherheit in Notsituationen ist größer, weil die Funktion der Anordnung nicht an Fremdengergie wie eine Hebebühne
gebunden ist und weil die Fahrschiene dank ihrer Handlichkeit
leicht in die Gebrauchslage gebracht werden kann. Schließlich hat die erfindungsgemäße Anordnung auch den Vorteil,
daß der an den Rollstühlen bzw. Rollstuhlhalterungen vorgesehene Gleithänger auch zur Sicherung der Rollstühle
verwendet werden kann insofern, als nicht nur eine unmittelbare Sicherung der Rollstühle am Fahrzeugboden möglich ist,
sondern über den Gleithänger auch an der Fahrzeugdecke.
Daß ein speziell für diese Anordnung vorgesehener Rollsitz
außerdem mit der erforderlichen Transportsicherheit versehen werden kann, versteht sich leicht. Aber auch eine
dafür vorgesehene Halterung für handelsübliche Rollstühle
kann leicht so ausgeführt werden, daß sie einerseits
sicher am Fahrzeug verankert werden kann und andererseits
die Stabilität des Rollstuhls derart verbessert, daß
die für die Personensicherung erforderlichen Kräfte aufgenommen werden können.

Wenn in diesem Zusammenhang von einer Anordnung zum Aufnehmen
von Rollstuhlfahrgästen gesprochen wird, so soll dieser
Begriff nicht nur den Einstiegsvorgang, sondern auch den
Ausstiegsvorgang und das Umladen bezeichnen.

Unter Rollsitzen sind im allgemeinen die erfindungsgemäßen
Rollsitze mit Gleithänger zu verstehen, die auch Mittel
für die Transportsicherung einer Person und die dafür
erforderliche Eigenfestigkeit besitzen und im übrigen
zumindest zwei Rollen für eine wenigstens beschränkte
Flurbeweglichkeit, beispielsweise in Hotelhallen, aufweisen.
Sie können entweder mit einem Gleithänger verbunden oder so
konstruiert sein, daß sie leicht mir einer Rollstuhlhalterung mit Gleithänger verbunden werden können.

Sie können, da sie speziell für Transportzwecke vorgesehen
ist, mit geringerem Raumbedarf als handelsübliche Rollstühle ausgestattet werden. - Unter handelsüblichen
Rollstühlen sind diejenigen zu verstehen, die gegenwärtig
im Handel sind und im allgemeinen keine speziellen Einrichtungen für die Beförderung auf Verkehrsmitteln aufweisen. Sie sind verhältnismäßig leicht und im allgemeinen
zusammenklappbar gebaut. - Unter Rollstuhlhalterungen sind
Einrichtungen zu verstehen, die erfindungsgemäß mit einem
Gleithänger ausgerüstet sind und Einrichtungen aufweisen,
die zur sicheren Verbindung mit einem handelsüblichen Rollstuhl oder einem Rollsitz dienen und einerseits das Anheben
des Rollstuhls oder -sitzes mittels der erfindungsgemäßen
Anordnung und andererseits eine Stabilisierung des Rollstuhls oder -sitzes während des Transports ermöglichen.


Zweckmäßigerweise ist die Fahrschiene am Verkehrsmittel
derart angeordnet, daß sie einerseits eine inoperative
Transportlage einnehmen kann, in welcher sie beispielsweise in das Fahrzeug eingeklappt oder eingeschoben ist,
und andererseits in eine sich in Richtung der Aufnahmebewegung erstreckende Gebrauchsstellung überführt und in
dieser befestigt werden kann. Jedoch ist es selbstverständlich auch denkbar, daß die Fahrschiene bleibend in
der Abfahrts- bzw. Ankunftsstation vorgesehen ist.

Dabei kann sich die Schiene von einer seitlichen Aufnahmeöffnung des Verkehrsmittels in Längsrichtung desselben
nach vorne oder hinten erstrecken und von einer am Verkehrsmittel anliegenden Stellung in eine von der Seitenwand Abstand aufweisende Arbeitsstellung bewegbar sein.
Auch wenn die Schiene außerhalb des Verkehrsmittels verhältnismäßig lang ist, um nicht zu steil zur Aufnahmeöffnung ansteigen zu müssen, wird so für die Schiene in
Arbeitsstellung und das Aufnehmen der Rollstuhlfahrgäste
nur wenig Platz unmittelbar neben dem  Verkehrsmittel
benötigt.

Zweckmäßigerweise ist die Fahrschiene in der Gebrauchslage
im wesentlichen starr, wobei ihre beiden Enden im wesentlichen dieselbe, der Höhe des Gleithängers entsprechende
Höhe über dem Erdboden bzw. dem Flur des Verkehrsmittels aufweisen. Die Höhe des äußeren Schienenendes ist dann
so gewählt, daß die Gleiter (beispielsweise Rollen) der
**auf** dem Boden an die Schiene herangefahrenen Rollstühle
(oder Rollsitze) über die Schiene gebracht werden können,
wonach der Rollstuhl in Richtung des ansteigenden Teils
der Schiene geschoben wird und dadurch vom Boden abgehoben
wird. Das innere Ende der Schiene ist wiederum so hoch
über dem Fahrzeugflur angeordnet, daß die Bodenräder des
Rollstuhls sich auf den Fahrzeugflur aufsetzen, wodurch
der Gleiter von der Schiene frei wird. Der Rollstuhl wird
hierbei ausschließlich von Hand bewegt. Statt dessen
können selbstverständlich auch mechanische Hubmittel vorgesehen sein. Beispielsweise kann die Fahrschiene mit einer
Seilwinde kombiniert sein. Es ist auch möglich, daß das
äußere Ende der Fahrschiene heb- und senkbar ist, so daß
der außen angehängte Rollstuhl zunächst angehoben wird,
um anschließend etwa horizontal verschoben werden zu können, bis er den Flur des Verkehrsmittels erreicht hat.

Damit der Rollstuhl beim Einschieben nicht versehentlich
rückwärts rollen kann, ist der Gleithänger vorzugsweise
mit einer Fahrsperre versehen, die mittels einer beim
Vorwärtsschieben bzw. Rückwärtsziehen betätigbaren Handhabe
lösbar ist. Sobald die den Rollstuhl einschiebende Person
nicht mehr schiebt und dadurch die Handhabe frei wird,
greift die Fahrsperre ein und hindert ein ungewolltes
Niedergleiten des Rollstuhls entlang der Schiene.

Sehr zweckmäßig kann es sein, im Verkehrsmittel mindestens
eine von der Aufnahmeöffnung zu den Abstellplätzen der
Rollstühle führende weitere Fahrschiene vorzusehen. Diese ist zweckmäßigerweise als Fortsetzung der Aufnahme-Fahrschiene vorgesehen und kann sogar einstückig mit dieser
ausgeführt sein. Es können mehrere weitere Fahrschienen
an eine Aufnahme-Fahrschiene angeschlossen sein oder anschließbar sein. Diese weitere Fahrschiene ermöglicht es,
die Rollstühle von der Aufnahme unmittelbar zu den für sie
vorgesehenen Abstellplätzen zu fahren, wobei durch die
hängende Anordnung stets maximale Stabilität und Sicherheit
gewährleistet ist.

Die weitere Fahrschiene kann zur bleibenden Verbindung
mit den Gleithängern ausgebildet sein, wobei zweckmäßigerweise
Arretierungseinrichtungen für die Gleithänger oder die
Rollstühle vorgesehen sind. Es ist einleuchtend, daß die
bleibende Verbindung der Gleithänger mit der Fahrschiene
unabhängig davon, ob die Arretierung unmittelbar bei der
Fahrschiene an den Gleithängern angreift, die Verankerungssicherheit der Rollstühle im Verkehrsmittel verbessert.
Vorteilhaft ist es, wenn Arretierungseinrichtungen sowohl
im unteren Bereich des Rollstuhls bzw. der Rollstuhlhalterung als auch im Bereich der Fahrschiene vorgesehen
sind.

Im Rahmen der Erfindung ist es jedoch auch möglich, die
Rollstühle von der weiteren Fahrschiene lösbar zu gestalten. Der Rollstuhl wird dann mittels der Fahrschiene
in die Nähe des vorgesehenen Abstellplatzes gebracht,
zu diesem hingeschoben und dort mittels gesondert von
der weiteren Fahrschiene vorgesehener Arretierungseinrichtungen verankert.

Das Vorstehende hat nicht nur für handelsübliche Rollstühle Gültigkeit, sondern auch für die eigens für die
erfindungsgemäße Anordnung vorgesehenen Rollsitze. Diese
werden so ausgeführt, daß sie für diese Verankerung geeignet geformt sind, wobei sie im Vergleich mit handelsüblichen Rollstühlen mit geringerem Platzbedarf eigens
für die Beförderungszwecke ausgestattet sein können, während ihre Bodenfahreigenschaften gegenüber handelsüblichen
Rollstühlen reduziert sind, nämlich auf dasjenige Maß, was
beispielsweise für den Transport der Fahrgäste in Hotelhallen erforderlich ist.

Wenn Rollstuhlhalterungen verwendet werden, können diese
ebenfalls mit Verankerungseinrichtungen oben und/oder
unten versehen sein. Zweckmäßigerweise weist sie eine
Einrichtung zum Anheben zumindest der nicht lenkbaren
Rollstühlräder und in deren Nähe Lenkrollen auf, damit die
verbundene Einheit von Rollstuhl und Rollstuhlhalterung
ohne Rücksicht auf die nicht lenkbaren Rollstuhlräder in
jeder Richtung rangierbar ist.

Vor allem bei solchen kleineren Fahrzeugen wie Taxis
braucht der Rollsitz häufig nicht außerhalb des Fahrzeugs und unabhängig von diesem bewegbar zu sein. Rollen, die ihn selbständig fahrbar machen, sind daher in
solchen Fällen mitunter entbehrlich. Es handelt sich dann
um eine besondere Art von Fahrzeugsitzen, die an der
Fahrschiene aus dem Fahrzeug zum Einsetzen des Fahrgasts herausfahrbar sind, um anschließend mit dem Fahrgast in die vorgesehene Position innerhalb des Fahrzeugs überführt zu werden. Die Fahrschiene braucht in diesem Falle nicht unbedingt oberhalb der Aufnahmeöffnung angeordnet zu sein.

Vorzugsweise ist die Höhe der Gleithänger verstellbar, damit ein Rollstuhl bzw. Rollstuhlträger mit der Fahrschiene auch dann verbunden werden kann, wenn deren Höhe über dem Boden außerhalb des Verkehrsmittels aus irgendwelchen Gründen, beispielsweise wegen Bodenunebenheit, von dem Normmaß abweichen sollte. Außerdem gestattet dieses Merkmal die Anpassung des Gleithängers an unterschiedlich hohe handelsübliche Rollstühle.

Zweckmäßigerweise ist der Rollsitz bzw. Rollstuhlträger gegenüber der Fahrschiene um eine vertikale Achse drehbar, damit der Rollstuhl in beiden Richtungen geschoben werden kann.

Eine einfache Möglichkeit zur Verstellung des Abstandes der einen handelsüblichen Rollstuhl greifenden Arme eines Rollstuhlträgers besteht darin, daß jeder Arm über einen besonderen Hänger mit dem Gleiter schwenkbar um eine horizontale zu dem Arm etwa parallele Achse verbunden ist.

Die Erfindung wird im folgenden näher unter Bezugnahme auf die Zeichnung erläutert, die vorteilhafte Ausführungsbeispiele veranschaulicht. Darin zeigen:

0071959

Fig. 1      einen schematischen Querschnitt durch einen
            Omnibus mit einer Einstiegsöffnung, die mit
            der erfindungsgemäßen Anordnung versehen ist,

Fig. 2      einen Längsschnitt durch einen Omnibus mit
            hinterer Einstiegsöffnung,

Fig. 3      eine perspektivische Ansicht eines Omnibusses
            mit einer anderen Ausführungsform der erfindungsgemäßen Anordnung,

Fig. 4      die Seitenansicht eines Rollstuhls
            und

Fig. 5 u. 6  eine Seitenansicht und Rückansicht einer
             Rollstuhlhalterung.


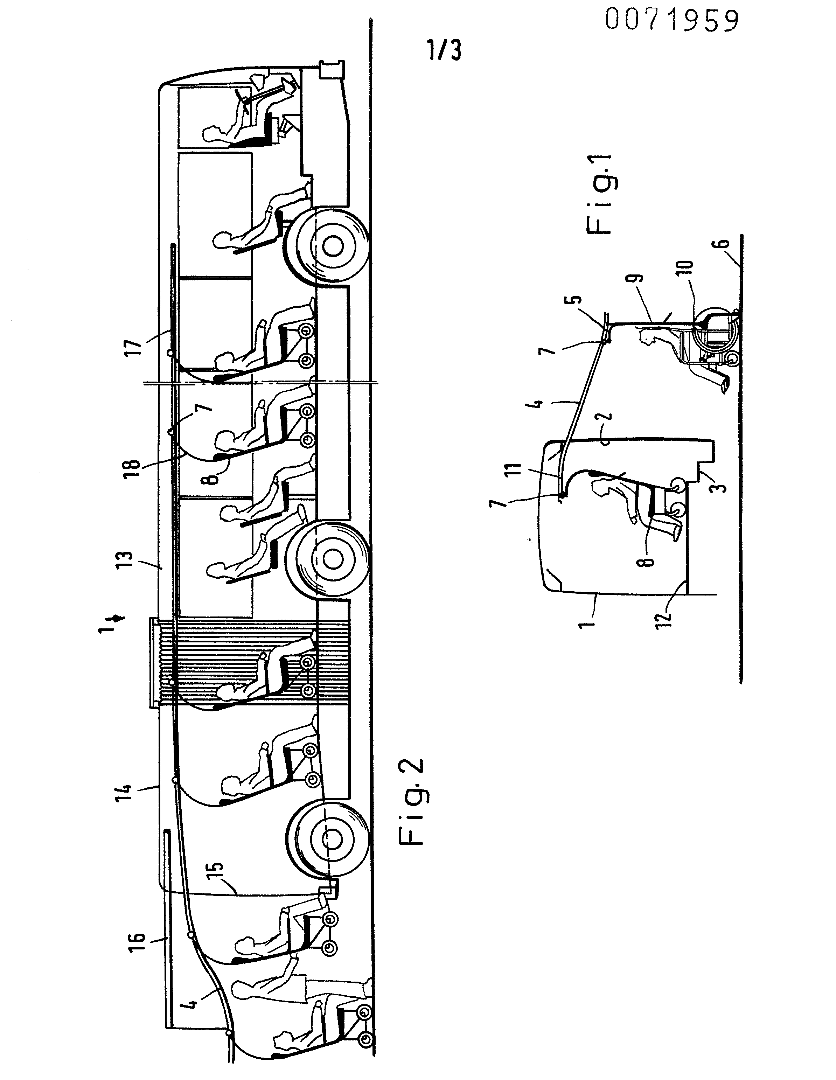

Gemäß Fig. 1  hat der Omnibus 1  eine Einstiegsöffnung
(Aufnahmeöffnung) 2  mit Stufen 3.  Eine Fahrschiene 4
ist mit nicht dargestellten Mitteln starr am Omnibus
derart befestigt, daß ihr äußeres Ende 5  über dem Boden 6
eine Höhe hat, die etwas geringer ist oder wenigstens
genauso hoch ist wie die Höhe des Gleiters 7  des einzuschiebenden Rollsitzes 8  bzw. der Rollstuhlhalterung 9
eines handelsüblichen Rollstuhls 10.  Ihr inneres Ende 11
hat eine solche Höhe über dem Flur 12  des Omnibus 1,
daß der Rollstuhl ohne Schwierigkeit eingefahren und auf
dem Flur 12  abgesetzt werden kann. Nach Gebrauch wird die
Schiene 4  in den Omnibus eingeschoben oder eingeklappt
oder an seine Außenseite herangeklappt, so daß sie weder
innen noch außen störend in Erscheinung tritt.

Gemäß Fig. 2 ist ein Gelenkbus 1, der aus einem Vorderwagen 13 und einem Nachläufer 14 besteht, mit einer
hinteren Aufnahmeöffnung 15 versehen. Diese Aufnahmeöffnung kann verhältnismäßig niedrig angeordnet sein,
weil der Motor im Vorderwagen 13 vorgesehen ist. Die
Aufnahmefahrschiene 4 wird von einem Galgen 16 gehalten,
der mit der Aufnahmeschiene in den Omnibus einschiebbar
ist. Für die Höhe der Fahrschiene innerhalb und außerhalb
des Omnibus gelten die Ausführungen, die oben zu Fig. 1
gemacht wurden.

An die Aufnahme-Fahrschiene schließt sich im Omnibus die
weitere Fahrschiene 17 an, die fest und bleibend am
Fahrzeugdach montiert ist. Die Gleiter 7 an den Gleithängern 18 der Rollsitze 8 bleiben im Fahrzeug mit
dieser weiteren Fahrschiene verbunden, wodurch der Stabilisierungseffekt dieser Verbindung genutzt wird. Weitere
Verankerungsmittel am Fahrzeugboden und/oder an der Fahrschiene oder an der Fahrzeugdecke mögen (nicht gezeigt)
vorgesehen sein.

Es können mehrere solcher Fahrschienen entsprechend der
Anzahl von nebeneinander im Verkehrsmittel unterzubringenden
Rollsitz reihen vorgesehen sein. Man erkennt, daß die
Rollstuhlfahrgäste dank der erfindungsgemäßen Vorrichtung
im Notfall (beispielsweise Fahrzeugbrand) rasch aus dem
Verkehrsmittel herausgeschoben werden können.

0071959

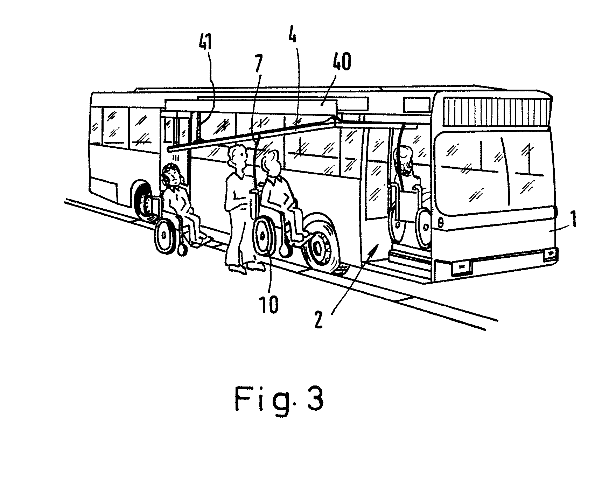

In Fig. 3 ist eine besonders vorteilhafte Ausführungsform gezeigt. Die Schiene 4 ist hier an einer seitlich aus dem Omnibus 1 herausfahrbaren Trageinrichtung 40 aufgehängt und erstreckt sich von der Aufnahmeöffnung 2 nach hinten. Auch im herausgefahrenen Zustand nimmt die Schiene so nur wenig Raum ein. Die Rollstühle der Fahrgäste können an der Seite des Omnibusses an der Schiene eingehängt und zur Aufnahmeöffnung bewegt werden. Da die Schiene verhältnismäßig lang sein kann, braucht ihre Steigung nicht besonders groß zu sein, was das Einschieben der Rollstühle mit den Fahrgästen erleichtert. Der hintere Teil der Schiene 4 kann mit einer Kette 41 oder dergleichen so aufgehängt sein, daß die Schiene nach Gebrauch von der geneigten in eine waagerechte Stellung mit Hilfe eines entsprechenden Antriebs bewegt werden kann, so daß sie während der Fahrt nicht die Sicht aus den Fenstern behindert.

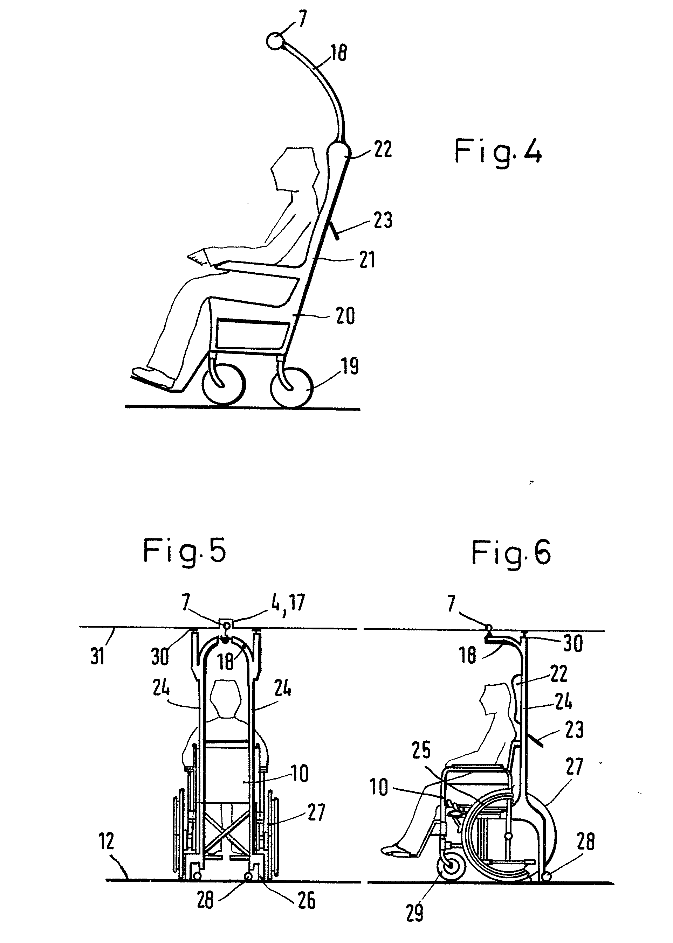

Ein Rollsitz der in Fig. 1 und 2 mit der Bezugsziffer 8 bezeichneten Art ist in Fig. 4 in größerem Maßstab dargestellt. Er besitzt zwei Lenkrollenpaare 19, die ein bequemes Rangieren ermöglichen und mit der für die Halterung im Verkehrsmittel erforderlichen Stabilität ausgestattet sind.

Sie brauchen weniger komfortabel ausgeführt zu sein,
als dies bei handelsüblichen Rollstühlen der Fall ist,
weil sie nicht für den Dauergebrauch auf dem Boden
vorgesehen sind, sondern lediglich gewisse und ggf. beschränkte Bewegungsmöglichkeiten außerhalb des Verkehrsmittels geben sollen. Da sie beide relativ geringen
Durchmesser haben können, ist der Platzbedarf des Rollsitzes
wesentlich geringer als der eines handelsüblichen Rollstuhls. -
Bemerkenswert ist ferner eine bessere Polsterung des Sitzes 20
und der Rückenlehne 21, wobei auch eine Kopfstütze 22
vorgesehen ist. Zweckmäßigerweise sind auch Gurte für die
Sicherung des Fahrgasts am Rollsitz vorhanden, die in der
Zeichnung nicht dargestellt sind. Das Gestell des Rollsitzes
ist mit der für die Sicherung des Fahrgasts im Verkehrsmittel erforderlichen Stabilität ausgestattet. An der
Lehne greift der Gleithänger 18 an, der oben, etwa über
dem Gesamtschwerpunkt oder ein wenig davor, die Gleitrolle 7 trägt. Hinter dem Rollsitzrücken ist eine Handhabe 23 vorgesehen, die zur Betätigung einer bei der
Gleitrolle 7 vorgesehenen, nicht gezeigten Fahrsperre
dient. Wenn der Rollsitz an der Handhabe 23 geschoben
oder gezogen wird, ist die Fahrsperre gelöst; andernfalls
rastet sie ein.

Die Rollstuhlhalterung gemäß Fig. 5 und 6 besteht aus
zwei Ständern 24, die gemeinsam oben den Gleithänger 18
mit der Gleitrolle 7 bilden. Sie besitzen nach vorne
ragende, in der Zeichnung nicht näher dargestellte Greifer 25,
die fest und starr mit dem handelsüblichen Rollstuhl 10
verbunden werden können, und zwar in solcher Weise, daß
dieser mittels der Halterung angehoben werden kann und
außerdem gegenüber den hebenden Kräften sowie gegenüber
den bei der Beförderung auftretenden Beschleunigungskräften stabilisiert wird. Diese Greifer 25 brauchen nicht wie in der Zeichnung dargestellt in der Nähe der Sitzfläche angreifen, sondern z.B. auch an den unteren Längsrohren des Rollstuhls. Sie laufen unten in Füßen 26 aus, die etwas tiefer reichen als die unlenkbaren Räder 27 des Rollstuhls, so daß der Rollstuhl, wenn er mit der Halterung verbunden ist, mittels dieser Füße fest und unbeweglich auf dem Boden aufsteht. Sie können auch mit dem Flur des Verkehrsmittels verriegelt werden. Neben den Füßen 26 sind Lenkrollen 28 vorgesehen, die durch eine geeignete Absenkvorrichtung derart abgesenkt werden können, daß die Füße vom Boden abgehoben werden, so daß die gesamte Anordnung nur noch auf diesen Lenkrollen 28 sowie den vorderen Lenkrollen 29 des Rollstuhls ruht und frei rangiert werden können. Wenn eine seitliche Rangierbarkeit der Anordnung nicht erforderlich ist, kann auch vorgesehen sein, daß die Lenkrollen 28 entfallen, während die Füße 26 heb- und absenkbar sind, so daß die Anordnung wahlweise auf den unlenkbaren Rädern 27 und auf den Füßen 26 ruht. - Die Ständer 24 laufen oben in Streben 30 aus, die im Zusammenwirken mit dem Dach 31 des Verkehrsmittels verriegelbar sind.

Die Erfindung ist nicht nur für Massenverkehrsmittel, sondern auch für Einzelfahrzeuge wie Pkw verwendbar.

0071959

Hilmar Feutlinske

Hamburg

Anordnung an einem Personenverkehrsmittel, insbesondere Omnibus, zum Aufnehmen (bzw. Abgeben von Rollstuhlfahrgästen

p 10473/82 EU
D/be  Nb/GK

Patentansprüche

1. Anordnung an einem Personenverkehrsmittel, insbesondere Omnibus, zum Aufnehmen (bzw. Abgeben) von Rollstuhlfahrgästen, dadurch gekennzeichnet, daß oberhalb der Aufnahmeöffnung des Verkehrsmittels eine Fahrschiene angeordnet ist und die Rollstühle bzw. Rollstuhlhalterungen einen mit der Schiene verbindbaren Gleithänger aufweisen.

2. Anordnung nach Anspruch 1, dadurch gekennzeichnet, daß die Schiene am Verkehrsmittel angeordnet und aus einer inoperativen Transportlage in eine sich in Richtung der Aufnahmebewegung erstreckende Gebrauchsstellung überführbar und in dieser befestigbar ist.

...2

0071959

3. Anordnung nach Anspruch 1 oder 2, dadurch gekennzeichnet, daß sich die Schiene von einer seitlichen Aufnahmeöffnung des Verkehrsmittels in Längsrichtung desselben erstreckt und von einer am Verkehrsmittel anliegenden Stellung in eine von der Seitenwand des Verkehrsmittels Abstand aufweisende Arbeitsstellung bewegbar ist.

4. Anordnung nach einem der Ansprüche 1 bis 3, dadurch gekennzeichnet, daß die Fahrschiene in der Gebrauchslage im wesentlichen starr ist und ihre beiden Enden im wesentlichen dieselbe, der Höhe des Gleithängers entsprechenden Höhe über dem Erdboden bzw. dem Flur des Verkehrsmittels aufweisen.

5. Anordnung nach einem der Ansprüche 1 bis 4, dadurch gekennzeichnet, daß die Fahrschiene in der Gebrauchslage derart flach geneigt verläuft, daß der besetzte Rollstuhl daran hängend von Handkraft aufwärts geschoben werden kann.

6. Anordnung nach einem der Ansprüche 1 bis 5, dadurch gekennzeichnet, daß die Fahrschiene mit mechanischen Hubmitteln kombiniert ist.

7. Anordnung nach einem der Ansprüche 1 bis 6, dadurch gekennzeichnet, daß der Gleithänger mit einer Fahrsperre versehen ist, die mittels einer beim Vorwärtsschieben bzw. Rückwärtsziehen betätigbaren Handhabe lösbar ist.

8. Anordnung nach einem der Ansprüche 1 bis 7, dadurch gekennzeichnet, daß im Verkehrsmittel mindestens eine von der Aufnahmeöffnung zu den Abstellplätzen der Rollstühle führende weitere Fahrschiene vorgesehen ist.

9. Anordnung nach Anspruch 8, dadurch gekennzeichnet, daß die weitere Fahrschiene zur bleibenden Verbindung mit den Gleithängern ausgebildet ist und Arretierungseinrichtungen für die Gleithänger oder die Rollstühle vorgesehen sind.

10. Anordnung nach einem der Ansprüche 1 bis 9, dadurch gekennzeichnet, daß die Gleithänger von der Fahrschiene lösbar ausgebildet sind und die Arretierungseinrichtungen gesondert von der weiteren Fahrschiene angeordnet sind.

11. Anordnung nach einem der Ansprüche 1 bis 10, dadurch gekennzeichnet, daß besondere Transport-Rollsitze vorgesehen sind, die Hängegleiter sowie Mittel für die Transportsicherung einer Person und die dafür erforderliche Eigenfestigkeit aufweisen.

12. Anordnung nach einem der Ansprüche 1 bis 11, dadurch gekennzeichnet, daß Rollstuhlhalterungen vorgesehen sind, die eine Einrichtung zum Anheben zumindest der nicht lenkbaren Rollstuhlräder und in deren Nähe Lenkrollen aufweist.

13. Anordnung nach einem der Ansprüche 1 bis 12, dadurch gekennzeichnet, daß statt eines handelsüblichen Rollstuhls ein speziell für den Transport konstruierter Rollsitz verwendet wird.

14. Anordnung nach einem der Ansprüche 1 bis 12, dadurch gekennzeichnet, daß statt eines handelsüblichen Rollstuhls ein rollenloser Fahrzeugsitz verwendet wird.

15. Anordnung nach einem der Ansprüche 1 bis 14, dadurch gekennzeichnet, daß die Höhe der Gleithänger verstellbar ist.

16. Anordnung nach einem der Ansprüche 1 bis 15, dadurch gekennzeichnet, daß der Gleithänger an dem Gleiter drehbar ist.

Fig. 2

Fig. 1

0071959

Fig. 3

0071959

Fig. 4

Fig. 5

Fig. 6